Europäisches Patentamt

European Patent Office

Office européen des brevets

(11) Veröffentlichungsnummer: **0 186 789**
**B1**

(12) **EUROPÄISCHE PATENTSCHRIFT**

(45) Veröffentlichungstag der Patentschrift :
28.06.89

(21) Anmeldenummer : 85115136.5

(22) Anmeldetag : 29.11.85

(51) Int. Cl.⁴ : **C 08 F226/10**, B 29 D 11/02 //
(C08F226/10, 226:02, 220:12,
246:00)

(54) Hydrophile Copolymere, deren Verwendung als biomedizinische Materialien und hieraus hergestellte kontaktoptische Gegenstände.

(30) Priorität : 11.12.84 DE 3445093

(43) Veröffentlichungstag der Anmeldung :
09.07.86 Patentblatt 86/28

(45) Bekanntmachung des Hinweises auf die Patenterteilung : 28.06.89 Patentblatt 89/26

(84) Benannte Vertragsstaaten :
AT BE CH DE FR GB IT LI NL SE

(56) Entgegenhaltungen :
EP—A— 0 017 512

(73) Patentinhaber : BAYER AG
D-5090 Leverkusen 1 Bayerwerk (DE)

(72) Erfinder : Geyer, Otto-Christian, Dr.
Bahnhofstrasse 12
D-6330 Wetzlar (DE)
Erfinder : Wingler, Frank, Dr.
Walter-Flex-Strasse 17
D-5090 Leverkusen 1 (DE)

**Beschreibung**

Die Erfindung betrifft neue vernetzte, optisch transparente durchdrungene Netzwerkcopolymere aus N-Vinyl-pyrrolidon, N-Alkyl-N-vinylcarbonamiden, Methacrylaten und gegebenenfalls weiteren copolymerisierenden Monomeren bestimmter Zusammensetzungen sowie ein Verfahren zu ihrer Herstellung. Die Copolymeren weisen ein Wasseraufnahmevermögen von bis zu etwa 80 Gew.-%, bezogen auf den hydratisierten Zustand, auf und eignen sich zur Herstellung von Formkörpern, die beim Gebrauch in Kontakt mit lebendem Gewebe stehen. Beispiele hierfür sind weiche Kontaktlinsen und Sklerallinsen von hoher mechanischer Stabilität, insbesondere dünne bis sehr dünne VT (verlängerte Tragezeit)-Linsen.

Weiche, hydrophile Kontaktlinsen aus Hydroxyethylmethacrylat (HEMA) wurden in den Jahren 1963 bis 1965 (vor allem in der CSSR) entwickelt. Von Kontaktlinsenträgern wurde dieser Linsentyp wegen des angenehmen Tragegefühls recht schnell akzeptiert. Die mechanische Beanspruchung des Hornhautgewebes ist bei weichen Linsen geringer als bei harten Linsen ; außerdem wird der Stoffwechsel der Hornhaut weniger beeinflußt.

Einfache Anpassung, kurze Eingewöhnung und guter Tragekomfort waren dafür ausschlaggebend, daß weiche hydrophile Linsen sich in kurzer Zeit einen beträchtlichen Marktanteil eroberten.

Nach über einem Jahrzehnt Erfahrungen mit HEMA-Linsen sind jedoch auch Nachteile dieser Materialgruppe bekanntgeworden. So tritt nach längerem Tragen von weichen hydrophilen HEMA-Linsen eine Beeinträchtigung der Verträglichkeit auf. Die Ursachen hierfür sind von allem in Pflegemitteln enthaltene Konservierungsstoffe, Pflegemittel in Verbindung mit dem Linsenmaterial und schädliche Wirkungen des Materials selbst. HEMA-Materialien können toxische Schäden am Auge hervorrufen. Im klinischen Bild sind solche Schäden, neben den subjektiv vom Kontaktlinsenträger geäußerten Beschwerden, an Hyperämien im Limbusbereich und Verbreiterungen des Randschlingengefäßnetzes mit mehr als weniger stark ausgebildeten Hornhautvaskularisationen erkennbar. Letztere sind irreversibel und treten nicht selten ohne subjektive Beschwerden auf. Restmonomere und Vernetzer spielen hierbei eine Rolle.

Ähnliche Erscheinungen sind auch beim Tragen von Kontaktlinsen aus Copolymeren des HEMA's festzustellen.

Seit einiger Zeit werden für hochhydrophile Kontaktlinsen « HEMA-freie » Polymere oder Copolymere wie z. B. Polyvinylpyrrolidon oder Vinylpyrrolidon/Methylmethacrylat-Copolymere verwendet ; sie sollen eine bessere Augenverträglichkeit als HEMA-Linsen aufweisen. Diese sogenannten Hydrogellinsen sind hydrophile Polymernetzwerke auf Basis wasserlöslicher Monomere, die in der Lage sind, 25 bis über 70 Gew.-% Wasser, bezogen auf die hydratisierte Form, aufzunehmen und die infolge der Wasseraufnahme erweichen. Unter den wasserlöslichen Monomeren haben die N-Vinyllactame in Kombination mit Polyallyl-Vernetzern eine bedeutende Rolle gewonnen. Zum Stand der Technik seien beispielsweise die US-Patentschriften 4 158 089, 4 361 657 und 4 347 198 und die Europäischen Patentschriften 79 720, 79 721, 106 650 sowie Shell Polym. 7 (1983), N. 3, S. 67-71 genannt. Weiche Hydrogellinsen besitzen gegenüber Linsen aus harten und halbharten Materialien mit geringem Wasseraufnahmevermögen, z. B. Polymethylmethacrylat, Polysiloxanmethacrylaten, Celluloseacetobutyrat u. a., anfänglich auf Grund ihrer Weichheit und Anschmiegsamkeit einen höheren Tragekomfort, haben aber den Nachteil, daß sie mechanisch leicht zu beschädigen sind. Zur Erhöhung der Zugfestigkeit wurde daher der Vorschlag gemacht, der Monomermischung 0,9 bis 5 Gew.-% Methacrylsäure zuzusetzen (Europäische Patentschrift. Nr. 106 650). Restliche monomere Methacrylsäure besitzt jedoch in Kontaktlinsenmaterialien eine hohe toxische Wirkung, so daß nach einem Weg gesucht werden muß, eine hohe mechanische Festigkeit ohne Zusatz von Methacrylsäure zu erreichen. Das Comonomer Methacrylsäure erhöht auch die Affinität von Polymerisaten zu Proteinen und anderen Stoffwechselprodukten des Auges. Es kann daher bei Kontaktlinsen aus solchen Materialien leicht zu Ablagerungen, zu sogenannten « Jelly-bumps », kommen.

Bei Linsen aus N-Vinyllactam-Monomer enthaltenden Polymeren beobachtet man häufig nach längerem Tragen eine leichte Eintrübung sowie eine Braunverfärbung.

Es wurde hydrophiles, vernetztes Copolymerisat mit einem Wasseraufnahmevermögen von 25 bis 80 Gew.-Teilen, bezogen auf den hydratisierten Zustand, gefunden, das als copolymerisierte Monomere

A) 28 bis 70 Gew.-Teile N-Vinylpyrrolidon,

B) 2 bis 20 Gew.-Teile N-Methyl-vinyl-acetamid,

C) 10,0 bis 70 Gew.-Teile eines Esters der Methacrylsäure mit 1 bis 8 Kohlenstoffatomen im Alkoholrest,

D) 0 bis 1 Gew.-Teil eines polyfunktionellen (Meth)-acrylsäureester-Vernetzers,

E) 0,01 bis 1,5 Gew.-Teile eines polyfunktionellen Vinyl- oder Allylvernetzers, und

F) 0 bis 30 Gew.-Teile von mit A), B) und C) copolymerisierenden Monomeren,

enthält, wobei die Summe der Gew.-Teile 100 beträgt.

Diese neuen Copolymerisate sind geeignet als Materialien für kontaktophische Gegenstände, insbesondere für dünne bis sehr dünne VT-Kontaktlinsen. Diese ermöglichen aufgrund ihres hohen Wassergehaltes und ihrer geringen Mittendicke einen guten Sauerstofftransport, und weisen gleichzeitig eine hohe mechanische Stabilität auf. Sie trüben auf dem Auge nicht ein, verfärben sich nach längerem Tragen nicht braun und besitzen keine toxischen Nebenwirkungen.

Wesentlich ist die Kombination von zwei hydrophilen Monomeren, dem N-Vinylpyrrolidon und N-Alkyl-N-vinylamiden, mit Methacrylaten und Vernetzern auf Basis mehrfunktioneller (Meth)acrylsäureester und mehrfunktioneller Vinyl- und Allyl-Verbindungen.

Für die Ausgewogenheit der Eigenschaften aus den erfindungsgemäßen Materialien hergestellter kontaktoptischer Gegenstände, insbesondere für eine hohe Lichtdurchlässigkeit und hohe Festigkeit im hydratisierten Zustand, ist die oben angegebene Polymerzusammensetzung besonders vorteilhaft. Insbesondere ist die Kombination der beiden wasserlöslichen Monomeren Vinylpyrrolidon A) und V-Vinylamid B) im Gewichtsverhältnis 1 : 0,03 bis 1 : 0,7, sowie der Anteil E) an polyfunktionellen Vinyl- und Allyl-Vernetzern für die Transparenz sowie für die Radienstabilität im hydartisierten Zustand erforderlich.

Als Komponente B) sind die N-Methyl-N-vinylamide von Essigsäure, Propionsäure und Buttersäure. bevorzugt. Besonders bevorzugt ist das N-Methyl-N-vinylacetamid.

Als Komponente C) kommen aliphatische, cycloaliphatischen, aromatische und araliphatische Methacrylsäureester in Betracht. Bevorzugt sind Methylmethacrylat, Ethylmethacrylat, n-, i- und t-Butylmethacrylat, Cyclohexylmethacrylat, Phenyl- und Benzylmethacrylat, Methylmethacrylat ist besonders bevorzugt.

Die erfindungsgemäß geeigneten Monomeren D) sind an sich bekannte Verbindungen, die neben einer (Meth)-acrylestergruppe noch mindestens eine weitere gleiche oder verschiedene olefinisch ungesättigte Gruppe aufweisen. Hierzu gehören Acrylsäure- und Methacrylsäureester von mehrfunktionellen Alkoholen mit 2 bis 20 C-Atomen, wie z. B. Ethylenglykoldimethylacrylat, Diethylenglykoldimethacrylat, Triethylenglykol-dimethacrylat, Polyethylenglykol-dimethacrylat, 1,4-Butandiol-dimethacrylat, 1,6-Hexandiol-dimethacrylat, Trimethylolpropan-dimethacrylat, Trimethylolpropan-trimethacrylat, Pentaearythrittri- und tetramethacrylat, Methyl-1,5-pentandiol-dimethacrylat, Neopentylglykol-dimethacrylat, Methylenbismetharylamid sowie auch Dihydrodicyclopentadienyl-monomethacrylat, Allylmethacrylat, Vinylmethacrylat, Bis-phenol-A-dimethylacrylat und die entsprechenden Acrylsäureester.

Die Vernetzer E) weisen mindestens zwei olefinisch ungesättigte Gruppen (Vinyl- oder Allylgruppen), jedoch keine (Meth)acrylestergruppierungen auf. Beispiele für derartige, an sich bekannte Monomere sind Butandiol-di-vinylether, Divinylethylenharnstoff, Divinylpropylenharnstoff, 3,3'-Ethyliden-bis-(N-Vinyl-2-pyrrolidon), Triallylcyanurat, Triallylisocyanurat, Diethylenglykoldiallylcarbonat, Dialkylmaleat, Diallylitaconat, Trimethylolpropan-di- und triallylether, Triallyltrimellitat, N,N-Diallylmelamine, etc. Die Kombination der Vernetzer D) mit E) ist wesentlich für die Transparenz und Radienstabilität der aus dem Copolymerisat gefertigten Linsen oder Schalen sowie dafür, daß nur ein sehr geringer Anteil des Materials mit Wasser extrahierbar ist.

Vorzugsweise anstelle eines Teiles von C) können bei der Herstellung des Copolymerisats bis zu 30 Gew.-% an weiteren bekannten, mit A) und B) copolymerisierenden Monomeren F) eingesetzt werden, die den beabsichtigten Verwendungszweck der Copolymerisate nicht beeinträchtigten. Beispiele sind insbesondere $C_1$-$C_{12}$-Alkyl- oder Cycloalkylester der Acrylsäure oder der Methacrylsäure, Monohydroxy- oder dihydroxy-$C_2$-$C_6$-alkylester der (Meth)-acrylsäure, sowie deren Alkylether, wie z. B. 2-Hydroxyethylmethacrylat, 2-Hydroxyethylacrylat, 2,3-Dihydroxypropylmethacrylat, 1,4-Butandiol-monoacrylat, 2-Ethoxy-ethyl-methacrylat, Glycidylmethacrylat, Vinylacetat, Vinylpropionat, Vinyllaurat und Vinylversat. Das Gew.-Verhältnis von F) zu C) im Copolymerisat soll den Wert 0,5 nicht übersteigen.

Die vernetzende Copolymerisation der Monomere A) bis F) kann nach allen herkömmlichen Techniken der radikalischen Polymerisation erfolgen, z. B. ausgelöst durch Wärme, Elektronenstrahlen, Licht oder durch in Radikale zerfallende Initiatoren. Bevorzugt wird die Elektronenstrahlen- und Lichtpolymerisation angewandt, wie sie ausführlich in Int. chim. 1983, Nr. 242, S. 121-126 und in DE-OS 3 300 345 beschrieben ist. Die Polymerisation kann dabei als sogenannte Blockpolymerisation in Plattenkammern, aber auch in Glasrohren oder Kunststoffnäpfchen durchgeführt werden. Die Näpfchen können die dem herzustellenden Formkörper, z. B. dem Kontaktlinsen-Rohling oder auch der fertigen Linse, entsprechende Gestalt haben.

Die erfindungsgemäßen Polymeren haben im allgemeinen im trockenen Zustand einen Brechungsindex im Bereich $n_e = 1.5000$ bis $1.5500$, bevorzugt $1.5100$ bis $1.5300$.

Die erfindungsgemäßen Polymeren erreichen ihren Gleichgewichtswassergehalt in physiologischer Kochsalzlösung, gemessen an 1 mm dicken Blättchen der Abmessung $10 \times 10$ mm, innerhalb von 2 1/2 bis 5 Stunden, bevorzugt 3 bis 4 Stunden.

Bei den beanspruchten Copolymeren handelt es sich um ein durch simultane Polymerisation hergestelltes durchdrungenes Netzwerk aus einem hydrophilen und einem hydrophoben Polymer.

Der hydrophile Polymeranteil innerhalb des durchdrungenen Netzwerkcopolymerisates besteht vorwiegend aus den Monomeren A) und B). Die Monomeren A) und B) ähneln sich in ihrer Copolymerisationsreaktivität und liefern statistische Copolymerisate. Der hydrophobe Polymeranteil innerhalb des durchdrungenen Netzwerkpolymerisates besteht vorwiegend aus den Monomeren C). Durch die Vernetzung der Polymerketten durch die vernetzend wirkenden mehrfunktionellen Monomeren D) und E) wird bewirkt, daß sich die hydrophilen und hydrophoben Polymeranteile durchdringen und sich nicht entmischen können. Das durchdrungene Netzwerk ist im trockenem Zustand hart. Der Übergang vom glasigen zum kautschukelastischen Zustane liegt bei über 90 °C. Das Polymerisat quillt in Wasser, wobei es bis zu 4 fachen seines Gewichtes Wasser aufnehmen kann. Bezogen auf den hydratisierten Zustand liegt das Wasseraufnahmevermögen zwischen 40 und 80 Gew.-%, bevorzugt 55 bis 70 Gew.-%.

Es wurde auch ein Verfahren zur Herstellung eines hydrophilen, vernetzten Copolymerisates gefunden, das dadurch gekennzeichnet ist, daß man

A) 28 bis 70 Gew.-Teile N-Vinylpyrrolidon,

B) 2 bis 20 Gew.-Teile N-Methyl-vinyl-acetamid,

C) 10,0 bis 70 Gew.-Teile eines Esters der Methacrylsäure mit 1 bis 8 Kohlenstoffatomen im Alkoholrest,

D) 0 bis 1 Gew.-Teil eine polyfunktionellen (Meth)-acrylsäureester-Vernetzers,

E) 0,01 bis 1,5 Gew.-Teile eines polyfunktionellen Vinyl- oder Allylvernetzers, und

F) 0 bis 30 Gew.-Teile von mit A), B) und C) copolymerisierenden Monomeren,

durch radikalische Polymerisation polymerisiert.

Das erfindungsgemäße Verfahren wird im allgemeinen im Temperaturbereich von 20 bis 120 °C radikalisch durchgeführt.

Bei dem Verfahren handelt es sich um eine simultane vernetzende Polymerisation von hydrophilen Monomeren A) und B) auf der einen Seite und hydrophoben Monomeren C) auf der anderen Seite. Die Reaktivitätskonstanten der beiden Monomergruppen A), B) und C) für eine radikalische Copolymerisation sind so beschaffen, daß eine Copolymerisation von A) und B) mit C) fast unmöglich ist. Z. B. liegen in dem binären Monomergemisch aus Methylmethacrylat (1) und N-Vinylpyrrolidon (2) die Copolymerisationsparameter für $r_1$ bei 4,7 und für $r_2$ bei 0,005 (vgl. hierzu J.F. Bork und L.E. Colemann, J. Polym. Sci. 43, 413 (1960)) und für das binäre Monomergemisch aus Methylmethacrylat (1) und N-Methyl-vinylacetamid (2) die Copolymerisationsparameter für $r_1$ bei 4,9 und für $r_2$ bei 0,008 (vgl. J.P. Fischer und S. Rösinger, Makromol. Chem. 184, 1247, (1983)). Theoretisch dürfte in ein Copolymerisat erst Vinylpyrrolidon bzw. N-Methylvinylacetamid eingebaut werden, wenn alles Methylmethacrylat verbraucht ist. Tatsächlich beobachtet man aber, daß das vernetzte Netzwerk schon zu Beginn der Polymerisation erhebliche Anteile an Vinylpyrrolidon und N-Methylvinylacetamid eingebaut enthält.

Die erfindungsgemäße Polymerisation wird im allgemeinen durch Radikalbildner ausgelöst. Als Radikalbildner kommen z. B. Peroxide in Frage wie tert.-Butyperpivalat, Dicyclohexylperoxidicarbonat, Benzoylperoxid, tert.-Butylperoctoat, Lauroylperoxid, Wasserstoffperoxid, Di-tert.-Butylperoxid und Azoverbindungen wie Azodiisobuttersäuredinitril. Die in Radikale zerfallenden Initiatoren werden in Mengen von 0,01 bis 0,1 Gew.-% bez. auf Monomermischung verwendet. Weitere Radikalbildner sind z. B. Photoinitiatoren wie z. B. Benzoinisobutylether, Benzildimethylketal und Campherchinon. Selbstverständlich ist es möglich, die Radikalbildung auch durch Licht zu initiieren.

Die Polymerisation wird bei Temperaturen von 20 bis 80 °C, bevorzugt bei 30 bis 50 °C innerhalb von 5 Stunden bis 6 Tagen durchgeführt.

Das Verfahren kann auch in Gegenwart eines Quellmittels, wie Ethylenglykol, Methylpyrrolidon, Ethanol, Dimethylsulfoxid oder Dimethylformamid erfolgen.

Auf Grund ihrer hervorragenden biologischen Verträglichkeit können aus den erfindungsgemäßen Copolymerisaten ganz allgemein Gegenstände hergestellt werden, die im Kontakt mit lebendem Gewebe stehen sollen. Beispiele hierfür sind Unterfütterungsmaterialien in der Zahnmedizin oder durchsichtige Wundabdeckungen. Ein anderer Verwendungszweck ist die Herstellung von Verpackungsfolien, insbesondere für Lebensmittel. Besonders geeignet ist das erfindungsgemäße Material zur Herstellung von dünnen bis sehr dünnen VT-Linsen (Kontaktlinsen mit verlängerter Tragedauer). Unter dünnen bis sehr dünnen Linsen versteht man Linsen mit einer Mittendicke von 0,03 bis 0,15 mm bei Konstruktionen für Minuslinsen (zur Korrektur von Kurzsichtigkeit) ; von 0,08 bis 0,3 mm bei Pluslinsen (Korrektur von Weitsichtigkeit) und 0,1 bis 0,4 mm bei Aphalielinsen (Korrektur von Linsenlosigkeit). Durch Abflachen der Randzonen der Linsen-Innenflächen (asphärische Bauart) kann ein erhöhter Austausch an Tränenflüssigkeit erzeugt werden, wie es heutzutage bei Hartlinsen schon Stand der Technik ist, und damit die Verträglichkeit der Linsen auf dem Auge erhöht werden. Die erreichbare geringe Dicke der Linsen ermöglicht eine erhöhte Durchlässigkeit für Sauerstoff, was sich insbesondere bei VT-Linsen als Vorzug erweist.

Bei der Herstellung von dünnen bis sehr dünnen Linsen kann man auch der Ausgangsmonomermischung eine dem späteren Wassergehalt entsprechende Menge an wasserlöslichen Quellmitteln wie Dimethylsulfoxid, Dimethylformamid, Ethanol, Ethylenglykol zusetzen die nach der Polymerisation gegen Wasser ausgetauscht wird. Durch Polymerisation in sogenannten Einwegformen oder Kunststoffnäpfchen aus spritzgegossenen, inerten Materialien wie Polyethylen, Polypropylen, Polymethylpenten-1, Polyamiden, aromatischen Polyestern u. a. erhält man Linsen mit besonders glatter Oberfläche. Selbstverständlich können die Linsen aber auch in an sich bekannter Weise durch spanabhebende Techniken aus trockenen Rohlingen (« Blanks ») hergestellt werden.

Der besondere Vorteil der Weichlinsen aus dem erfindungsgemäßen Copolymerisat besteht darin, daß sie sich auch nach längerem Tragen auf dem Auge nicht eintrüben, sich nicht braun verfärben und neben einer hervorragenden Verträglichkeit auf dem Auge eine besonders gute Radienstabilität und optische Stabilität aufweisen, sowie gegenüber Methacrylsäure enthaltenden Polymeren nach längerem Tragen keine « Jelly bumps » -Ablagerungen aufweisen.

Im Gegensatz zu handelsüblichen Kontaktlinsen auf Basis von N-Vinylpyrrolidion besitzen die erfindungsgemäßen Materialien keine nennenswerten mit Wasser extrahierbaren Anteile (der extrahierbare Anteil liegt unter 0,5 Gew.-%).

Die aus dem erfindungsgemäßen Polymer durch spanabhebende Techniken aus trockenen Rohlingen hergestellten kontaktoptischen Gegenstände (z. B. Linsen) lassen sich überraschenderweise reproduzierbar in den hydratisierten Zustand überführen.

Herstellungsbeispiele

Beispiel 1

Monomermischungen der in der nachstehenden Tabelle aufgeführten Zusammensetzung wurden in Glasplattenkammern der Abmessungen 250 × 250 × 5 mm, versehen mit einer Dichtschnur, unter N₂ nach sorgfältigem Entgasen im Vakuum gefüllt und 6 Tage mit einer UV-Fluoreszenzlampe bestrahlt. Die Platten wurden 24 Stunden bie 80 °C und danach 2 Stunden bei 140 °C getempert. Aus den Platten wurden Rohlinge vom Durchmesser 12,5 mm gestochen, die 6 Tage in entionisiertem Wasser dialysiert wurden. Nach dem Trocknen der Rohlinge wurden hieraus Kontaktlinsen verschiedener Dicke gedreht und poliert.

| Zusammensetzung in Gew.-% | I | II | III | IV | V |
|---|---|---|---|---|---|
| N-Vinylpyrrolidon | 55 | 55 | 50 | 55 | 60 |
| N-Methyl-vinylacet-amid | 5 | 10 | 10 | 5 | 5 |
| Methylmethacrylat | 39,99 | 33,99 | 33,99 | 33,99 | 33,99 |
| 2-Hydroxyethylmeth-acrylat | - | - | 5 | - | - |
| Methacrylsäure-2-oxy-ethyl-ethylester | - | - | - | 5 | - |
| Ethylenglykol-dimeth-acrylat | 0,5 | 0,5 | 0,5 | 0,5 | 0,5 |
| Triallylcyanurat | 0,5 | 0,5 | - | 0,5 | 0,5 |
| Divinyladipat | - | - | 0,5 | - | - |
| Azodiisobutter-säuredinitril | 0,01 | 0,01 | 0,01 | 0,01 | 0,01 |
| Wasseraufnahmevermögen, bezogen auf hydratisierten Zustand (Gew.-%) | 54 | 62 | 68 | 56 | 62 |

Beispiel 2

Monomermischungen der in der nachstehenden Tabelle aufgeführten Zusammensetzung wurden im Vakuum entgast und in mit einem Stempel versehenen Röhrchen aus Polypropylen der Abmessung 12,5 mm × 6 cm blasenfrei gefüllt. Der Stempel wurde mit einer Feder verspannt, sodaß im Röhrchen ein Druck von etwa 0,4 bar Überdruck herrschte. Die Röhrchen wurden bei 40 °C Luftbadtemperatur in einem Umluft-Wärmeschrank mit Fluoreszenzslicht drei Tage bestrahlt, danach 24 Stunden bei 80 °C getempert, entformt und der Rohling in Wasser gequollen. Der gequollene Rohling wurde in Scheiben geschnitten und durch Trocknen das Wasseraufnahmevermögen bestimmt. Aus den getrockneten Rohlingen wurden spanabhebend zu Weichlinsen in Wasser quellbare Kontaktlinsen hergestellt.

(Siehe Tabelle Seite 6 f.)

| Zusammensetzung in | VI | VII | VIII | IX |
|---|---|---|---|---|
| Gew.-Teilen | F | G | H | J |
| N-Vinylpyrrolidon | 55 | 55 | 65 | 55 |
| N-Methyl-vinyl-acetamid | 15 | 15 | 7 | 17 |
| Methylmethacrylat | 30 | 30 | 28 | 28 |
| Dimethylformamid | 40 | - | - | - |
| Ethylenglykol-dimeth-acrylat | 0,1 | 0,1 | - | 0,5 |
| Triallylcyanurat | 1,0 | 1,0 | 1,0 | 0,7 |
| Benzoinisobutylether | 0,05 | 0,05 | 0,05 | 0,05 |
| Wasseraufnahmevermögen, bez. auf den hydratisierten Zustand Gew.-% | 68 | 64,7 | 64,8 | 67 |

Anwendungsbeispiele

Beispiel 3

Die Messung der Innenradien, der aus den Polymeren I bis IX aus Beispiel 1 und 2 hergestellten Kontaktlinsen bei Mittendicken bis zu 0,08 mm ergab gute Radienstabilitäten (Änderungen < 0,1 mm). Bei der Prüfung an der Spaltlampe konnten keine Schlieren oder Trübungen gefunden werden.

Beispiel 4

Lichtdurchlässigkeit : 90 % bei 4,7 mm Schichtdicke. Zur Bestimmung des mit Wasser extrahierbaren Anteils wurde ein trockenes Plättchen von 5 mm Dicke 24 Tage unter fließendem, entionisiertem Wasser aufbewahrt, danach 24 Stunden bei 80 °C und 2 Stunden bei 140 °C getrocknet und zurückgewogen. Der Gewichtsverlust lag in jedem Fall unter 0,5 Gew.-%.

Beispiel 5

Der Tierversuch am Kaninchenauge ergab auch nach 21 Tagen ununterbrochenen Tragens gute biologische Verträglichkeit des Materials mit dem Auge.

Beispiel 6

Bei ausgewählten Testpersonen, die leicht zur Ablagerung von « jelly-bumps » auf handelsüblichen Polyvinylpyrrolidon-Kontaktlinsen neigen, wurden auch nach längeren Tragen (mehrere Monate) ein stark reduzierte Neigung zu Ablagerungen festgestellt.

Beispiel 7

Brechungsindex von Polymeren (in trockenem Zustand) und Hydration.

Polymerisat VI : Brechungsindex : $n_e = 1,5165$ Erreichung des Gleichgewichtwassergehaltes, gemessen an einer 1 mm dicken Platte in physiologischer Kochsalzlösung : 3 Std.

Polymerisat VIII : Brechungsindex : $n_e = 1,5231$ Erreichen des Gleichgewichtwassergehaltes, gemessen an einer 1 mm dicken Platte in physiologischer Kochsalzlösung : 3,5 Std.

Patentansprüche

1. Hydrophiles, vernetztes Copolymerisat mit einem Wasseraufnahmevermögen von 25 bis 80 Gew.-Teilen, bezogen auf den hydratisierten Zustand, enthaltend als copolymerisierte Monomere

A) 28 bis 70 Gew.-Teile N-Vinylpyrrolidon,

B) 2 bis 20 Gew.-Teile N-Methyl-vinyl-acetamid,

C) 10,0 bis 70 Gew.-Teile eines Esters der Methacrylsäure mit 1 bis 8 Kohlenstoffatomen im Alkoholrest,

D) 0 bis 1 Gew.-Teil eines polyfunktionellen (Meth)-acrylsäureester-Vernetzers,

E) 0,01 bis 1,5 Gew.-Teile eines polyfunktionellen Vinyl- oder Allylvernetzers, und

F) 0 bis 30 Gew.-Teile von mit A), B) und C) copolymerisierenden Monomeren, wobei die Summe der Gew.-Teile 100 beträgt.

2. Hydrophile, vernetzte Copolymerisate nach Anspruch 1, dadurch gekennzeichnet, daß das Wasseraufnahmevermögen 40 bis 80 Gew.-Teile, bezogen auf den hydratisierten Zustand, beträgt.

3. Hydrophile, vernetzte Copolymerisate nach den Ansprüchen 1 und 2, dadurch gekennzeichnet, daß der Anteil von Komponente A) 45 bis 65 Gew.-% beträgt.

4. Hydrophile, vernetzte Copolymerisate nach den Ansprüchen 1 bis 3, dadurch gekennzeichnet, daß der Anteil der Komponente B) 4 bis 15 Gew.-Teile beträgt.

5. Hydrophile, vernetzte Copolymerisate nach den Ansprüchen 1 bis 4, dadurch gekennzeichnet, daß der Anteil der Komponente C) 20 bis 51 Gew.-Teile beträgt.

6. Hydrophile, vernetzte Copolymerisate nach den Ansprüchen 1 bis 5, dadurch gekennzeichnet, daß der Anteil von Komponente D) 0,1 bis 0,6 Gew.-Teile beträgt.

7. Hydrophile, vernetzte Copolymerisate nach den Ansprüchen 1 bis 6, dadurch gekennzeichnet, daß der Anteil von Komponente E) 0,1 bis 1,0 Gew.-Teile beträgt.

8. Hydrophile, vernetzte Copolymerisate nach den Ansprüchen 1 bis 7, dadurch gekennzeichnet, daß Komponente C) Methylmethacrylat ist.

9. Kontaktoptische Gegenstände, enthaltend ein hydrophiles, vernetztes Copolymerisat nach den Ansprüchen 1 bis 8.

10. Kontaktoptische Gegenstände nach Anspruch 9, dadurch gekennzeichnet, daß es sich um Kontaktlinsen handelt.

11. Kontaktoptische Gegenstände nach den Ansprüchen 9 und 10, dadurch gekennzeichnet, daß die Kontaktlinsen eine Mittendicke von 0,03 bis 0,15 mm bei Minuslinsen und 0,08 bis 0,3 mm bei Pluslinsen haben.

12. Kontaktoptische Gegenstände nach Anspruch 9, dadurch gekennzeichnet, daß es sich um Sclerallinsen handelt.

13. Kontaktoptische Gegenstände nach Anspruch 9, dadurch gekennzeichnet, daß es sich um Aphakielinsen handelt.

14. Kontaktoptische Gegenstände nach den Ansprüchen 9 und 13, dadurch gekennzeichnet, daß die Aphakielinsen eine Mittendicke von 0,1 bis 0,4 mm haben.

15. Rohling für kontaktoptische Gegenstände, enthaltend ein hydrophiles, vernetztes Copolymerisat nach den Ansprüchen 1 bis 8.

16. Verfahren zur Herstellung eines hydrophilen, vernetzten Copolymerisates, dadurch gekennzeichnet, daß man

A) 28 bis 70 Gew.-Teile N-Vinylpyrrolidon,

B) 2 bis 20 Gew.-Teile N-Methyl-vinyl-acetamid,

C) 10,0 bis 70 Gew.-Teile eines Esters der Methacrylsäure mit 1 bis 8 Kohlenstoffatomen im Alkoholrest,

D) 0 bis 1 Gew.-Teil eines polyfunktionellen (Meth)-acrylsäureester-Vernetzers,

E) 0,01 bis 1,5 Gew.-Teile eines polyfunktionellen Vinyl- oder Allylvernetzers, und

F) 0 bis 30 Gew.-Teile von mit A), B) und C) copolymerisierenden Monomeren,

durch radikalische Polymerisation polymerisiert.

17. Verwendung eines hydrophilen, vernetzten Copolymerisats nach den Ansprüchen 1 bis 8 zur Herstellung von Rohlingen für kontaktoptische Gegenstände.

18. Verwendung von Rohlingen nach Anspruch 15 zur Herstellung von kontaktoptischen Gegenständen.

19. Verwendung nach Anspruch 18, dadurch gekennzeichnet, daß man den Rohling spanabhebend bearbeitet.

## Claims

1. Hydrophilic, crosslinked copolymer having a water absorption capacity of 25 to 80 parts by weight, based on the hydrated state, and containing, as copolymerised monomers,

A) 28 to 70 parts by weight of N-vinylpyrrolidone,

B) 2 to 20 parts by weight of N-methyl-vinyl-acetamide,

C) 10.0 to 70 parts by weight of an ester of methacrylic acid having 1 to 8 carbon atoms in the alcohol radical,

D) 0 to 1 part by weight of a polyfunctional (meth)-acrylate crosslinking agent,

E) 0.01 to 1.5 parts by weight of a polyfunctional vinyl or allyl crosslinking agent, and

7

F) 0 to 30 parts by weight of monomers which copolymerise with A), B) and C), the sum being 100 parts by weight.

2. Hydrophilic, crosslinked copolymers according to Claim 1, characterized in that the water absorption capacity is 40 to 80 parts by weight, based on the hydrated state.

3. Hydrophilic, crosslinked copolymers according to Claims 1 and 2, characterized in that the proportion of component A) is 45 to 65 % by weight.

4. Hydrophilic, crosslinked copolymers according to Claims 1 to 3, characterized in that the proportion of component B) is 4 to 15 parts by weight.

5. Hydrophilic, crosslinked copolymers according to Claims 1 to 4, characterized in that the proportion of component C) is 20 to 51 parts by weight.

6. Hydrophilic, crosslinked copolymers according to Claims 1 to 5, characterized in that the proportion of component D) is 0.1 to 0.6 parts by weight.

7. Hydrophilic, crosslinked copolymers according to Claims 1 to 6, characterized in that the proportion of component E) is 0.1 to 1.0 parts by weight.

8. Hydrophilic, crosslinked copolymers according to Claims 1 to 7, characterized in that component C) is methyl methacrylate.

9. Contact-optical objects, containing a hydrophilic, crosslinked copolymer according to Claims 1 to 8.

10. Contact-optical objects according to Claim 9, characterized in that they are contact lenses.

11. Contact-optical objects according to Claims 9 and 10, characterized in that the contact lenses have a central thickness of 0.03 to 0.15 mm in the case of negative lenses and 0.08 to 0.3 in the case of positive lenses.

12. Contact-optical objects according to Claim 9, characterized in that they are scleral lenses.

13. Contact-optical objects according to Claim 9, characterized in that they are aphakia lenses.

14. Contact-optical objects according to Claim 9 and 13, characterized in that the aphakia lenses have a central thickness of 0.1 and 0.4 mm.

15. Blank for contact-optical objects containing hydrophilic, crosslinked copolymer according to Claims 1 to 8.

16. Process for the preparation of a hydrophilic, crosslinked copolymer, characterized in that

A) 28 to 70 parts by weight of N-vinylpyrrolidone,

B) 2 to 20 parts by weight of N-methyl-vinyl-acetamide,

C) 10.0 to 70 parts by weight of an ester of methacrylic acid having 1 to 8 carbon atoms in the alcohol radical,

D) 0 to 1 part by weight of a polyfunctional (meth)-acrylate crosslinking agent,

E) 0.01 to 1.5 parts by weight of a polyfunctional vinyl or allyl crosslinking agent, and

F) 0 to 30 parts by weight of monomers which copolymerise with A), B) and C), are polymerised by free-radical polymerisation.

17. Use of the hydrophilic, crosslinked copolymer according to Claims 1 to 8 for the production of blanks for contact-optical objects.

18. Use of blanks according to Claim 15 for the production of contact-optical objects.

19. Use according to Claim 18, characterized in that the blank is machined.


## Revendications

1. Copolymère réticulé hydrophile ayant une capacité d'absorption de l'eau de 25 à 80 parties en poids, par rapport à l'état hydraté, contenant en tant que monomères copolymérisés :

A) 28 à 70 parties en poids de N-vinylpyrrolidone

B) 2 à 20 parties en poids de N-méthyl-vinyl-acétamide,

C) 10,0 à 70 parties en poids d'un ester méthacrylique contenant 1 à 8 atomes de carbone dans le radical alcoolique,

D) 0 à 1 partie en poids d'un agent réticulant polyfonctionnel du type ester (méth)acrylique,

E) 0,01 à 1,5 parties en poids d'un agent réticulant polyfonctionnel vinylique ou allylique, et

F) 0 à 30 parties en poids de monomères copolymérisant avec A), B) et C), la somme des parties en poids étant de 100.

2. Copolymères réticulés hydrophiles selon la revendication 1, caractérisés en ce que leur capacité d'absorption de l'eau est de 40 à 80 parties en poids par rapport à l'état hydraté.

3. Copolymères réticulés hydrophiles selon les revendications 1 et 2, caractérisés en ce que la proportion du composant A) est de 45 à 65 % en poids.

4. Copolymères réticulés hydrophiles selon les revendications 1 à 3, caractérisés en ce que la proportion du composant B) est de 4 à 15 parties en poids.

5. Copolymères réticulés hydrophiles selon les revendications 1 à 4, caractérisés en ce que la proportion du composant C) est de 20 à 51 parties en poids.

6. Copolymères réticulés hydrophiles selon les revendications 1 à 5, caractérisés en ce que la proportion du composant D) est de 0,1 à 0,6 partie en poids.

7. Copolymères réticulés hydrophiles selon les revendications 1 à 6, caractérisés en ce que la proportion du composant E) est de 0,1 à 1,0 partie en poids.

8. Copolymères réticulés hydrophiles selon les revendications 1 à 7, caractérisés en ce que le composant C) est le méthacrylate de méthyle.

9. Objets de contact optique contenant un copolymère réticulé hydrophile selon les revendications 1 à 8.

10. Objets de contact optique selon la revendication 9, caractérisés en ce qu'ils consistent en lentilles de contact.

11. Objets de contact optique selon les revendications 9 et 10 caractérisés en ce que les lentilles de contact ont une épaisseur moyenne de 0,03 à 0,15 mm pour les lentilles à correction négative et de 0,08 à 0,3 mm pour les lentilles à correction positive.

12. Objets de contact optique selon la revendication 9, caractérisés en ce qu'ils consistent en lentilles sclérales.

13. Objets de contact optique selon la revendication 9, caractérisés en ce qu'ils consistent en lentilles pour aphacie.

14. Objets de contact optique selon les revendications 9 et 13, caractérisés en ce que les lentilles pour aphacie ont une épaisseur moyenne de 0,1 à 0,4 mm.

15. Flan pour objets de contact optique, contenant un copolymère réticulé hydrophile selon les revendications 1 à 8.

16. Procédé de préparation d'un copolymère réticulé hydrophile, caractérisé en ce que l'on polymérise par polymérisation radicalaire :

    A) 28 à 70 parties en poids de N-vinylpyrrolidone,

    B) 2 à 20 parties en poids de N-méthyl-vinyl-acétamide,

    C) 10,0 à 70 parties en poids d'un ester méthacrylique contenant 1 à 8 atomes de carbone dans le radical alcoolique,

    D) 0 à 1 partie en poids d'un agent réticulant polyfonctionnel consistant en un ester (méth)acrylique,

    E) 0,01 à 1,5 parties en poids d'un agent réticulant polyfonctionnel vinylique ou allylique, et

    F) 0 à 30 parties en poids de monomères copolymérisant avec A), B) et C).

17. Utilisation d'un copolymère réticulé hydrophile selon les revendications 1 à 8 pour la fabrication de flans pour objets de contact optique.

18. Utilisation des flans selon la revendication 15 pour la fabrication d'objets de contact optique.

19. Utilisation selon la revendication 18, caractérisée en ce que l'on travaille le flan par enlèvement de copeaux.